# DEMANDE DE BREVET EUROPEEN

(11) **EP 0 930 553 A2**
(43) Date de publication de la demande: **21.07.1999**
(21) Numéro de dépôt: 99100585.1
(22) Date de dépôt: 14.01.1999
(51) Int. Cl.: G05B 19/4093, G05B 19/18

(54) **Machine tournante électrique améliorée et méthode d'amélioration de cette machine**

(30) Priorité: 15.01.1998 CH 6598
(71) Demandeur: Willemin, Marcel, 2854 Bassecourt (CH)
(72) Inventeur: Willemin, Marcel, 2854 Bassecourt (CH)
(74) Mandataire: Coutts, William Robert

(57) **Abrégé**

Perceuse d'établi (1) ou manuelle (11) transformable en taraudeuse, ou permettant, grâce à un variateur (22), programmable au moyen d'un tableau (41) comprenant un écran de contrôle (42), deux potentiomètres (P1, P2) et des boutons de saisie (S1 - S15) de percer des trous de profondeur très précise, de manière répétitive et sûre, sans lassitude de l'opérateur. Dans la fonction taraudeuse, une pédale (3, 24, 25) commande l'inversion du sens de rotation pour le débourrage des copeaux.

## Description

La présente invention concerne une machine selon préambule de la revendication 1, ainsi qu'une méthode d'amélioration des fonctionnalités d'une telle machine.

La machine selon l'invention est équipée d'un moteur électrique faisant tourner un outil autour d'un axe z'z . Cet outil est serré dans un mandrin qui lui communique son mouvement. L'avance de l'outil est représentée par la cote de son extrémité sur l'axe z'z. Cette avance, dans le cadre de l'invention, est déterminée manuellement par l'opérateur de la machine, qui peut être une visseuse, une taraudeuse ou une perceuse.

Le maniement d'une telle machine, particulièrement lors de tâches répétitives, requiert une grand habileté de la part de l'opérateur pour la manoeuvrer de façon identique en vue de travailler avec les mêmes cotes de vissage, de taraudage ou de perçage. Au bout d'un certain nombre d'opérations, on constate que le meilleur des ouvriers ne peut éviter des écarts dans ces cotes, ce qui pose un problème qui n'a jamais été résolu de façon satisfaisante.

L'invention se propose de résoudre ce problème par les moyens décrits dans la partie caractérisante de la revendication 1.

Au lieu de doser le couple du moteur par pression sur une commande électrique, ou autres moyens peu précis, l'opérateur est aidé par des moyens d'assistance qui agissent sur un variateur de vitesse, ce variateur commandant le courant fort qui agit sur le moteur. Le déplacement de l'outil reste ainsi dans les cotes prescrites, augmentant la qualité du travail fourni pour une fatigue moindre de l'opérateur.

Les fonctionnalités de la machine tournante selon l'invention sont améliorées par une programmation électronique faisant partie des moyens d'assistance précités.

Cette méthode d'amélioration s'applique particulièrement à un mode de réalisation de l'invention dans lequel la machine est une perceuse, équipée d'un outil d'excavation tel qu'une fraise, une mèche ou un foret hélicoïdal. Dans ce mode, l'avance de l'outil n'est plus liée à l'angle de rotation imprimé par le moteur; le problème à résoudre est particulièrement celui d'un perçage borgne à pratiquer sur une surface généralement plane, avec un contrôle précis de la profondeur de perçage.

On passera d'abord brièvement en revue l'état de la technique.

Lorsque la perceuse est une perceuse portative, elle est tenue directement par l'opérateur, qui perce par exemple un trou dans un mur. Il est alors connu de disposer, parallèlement au foret, une baguette fixe par rapport à la perceuse, et qui indique à l'opérateur que la profondeur désirée est atteinte lorsque l'extrémité de la baguette touche le mur.

Il est connu des perceuses coulissant selon une direction matérialisée par un guide. Ce guide, servant à améliorer la précision directionnelle du perçage, peut être solidaire d'un socle magnétique, ce socle adhérant à un matériau ferreux devant être percé. Le socle peut également être rendu solidaire du matériau à percer par une fixation temporaire connue en soi.

Il est également connu des perceuses à colonne conventionnelles pourvues d'un système de butée mécanique, comprenant une tige filetée sur laquelle sont mobiles des molettes qui déterminent à quel endroit la descente de la colonne doit être stoppée. Dans ces perceuses à colonnes, on dose l'avance de l'outil par un dispositif tel qu'un volant garni de boules.

Le réglage des profondeurs de perçage, dans tous ces types de perceuses, est peu précis. Par ailleurs, la complexité de mise en oeuvre des molettes sur tige filetée dissuade souvent l'opérateur de leur utilisation.

Lorsque de nombreux trous, de profondeur identique, doivent être percés, le contrôle visuel de la profondeur de pénétration du foret est fastidieux, voire impossible lorsque des précisions de l'ordre du 1/10^{ème} de mm sont recherchés.

Dans une forme particulière de réalisation de l'invention, toujours sur le mode "perceuse", la programmation entraîne la mise en fonction d'un frein agissant sur l'avance de l'outil, sans nécessairement agir sur sa rotation.

Dans une forme particulière de réalisation de l'invention, la programmation à laquelle il est fait appel comprend la possibilité de saisir la cote du début du perçage sur la pièce, puis de saisir la profondeur de perçage désirée (dite valeur de consigne de la profondeur de perçage Zc) à l'aide d'une commande électronique. Cette valeur est alors mémorisée et reste commune à plusieurs cycles de perçage consécutifs.

La saisie de la cote du début du perçage peut avantageusement se faire sans que l'outil ne tourne, préalablement au perçage.

La partie électronique gère la vitesse de rotation de l'outil en fonction de l'avance dans la matière, et par anticipation, diminue la vitesse de rotation à l'approche de la valeur Zc, ce qui évite un dépassement de celle-ci. Si l'on stoppait la rotation précisément à la valeur Zc, le temps de réaction jusqu'à l'arrêt total de l'outil entraînerait un perçage un peu plus profond que programmé.

Dans une forme particulière de réalisation de l'invention, la programmation comprend la possibilité de paramétrer un profil de la vitesse de rotation du moteur électrique au cours d'un cycle de perçage, ainsi que de son ralentissement lorsque la pénétration s'approche de la valeur de consigne de la profondeur de perçage.

Dans une forme particulière de réalisation de l'invention, la programmation pourra prévoir, par défaut, que la vitesse de rotation précitée doit être nulle au moment précis où la profondeur Zc est atteinte, et reprend une valeur dite de remontée lorsque l'opérateur laisse ou fait remonter le foret d'une valeur quelconque, c'est-à-dire dès que l'appareil détecte un incrément en z, autrement dit une diminution de la profondeur de pénétration du foret. Cette vitesse de rotation dite de remontée sert à évacuer convenablement les copeaux détachés avant l'arrêt du foret à la profondeur de perçage Zc.

Le ralentissement de la rotation du moteur électrique, à l'approche de la valeur de consigne Zc, jusqu'à l'arrêt total du moteur pour éviter de dépasser cette valeur, devra, selon l'expérience acquise par l'inventeur, rester dans certaines limites. Ces limites sont imposées par l'inertie du rotor du moteur électrique. Comme on l'a vu, il importe que le ralentissement commence suffisamment tôt.

Dans une forme particulière de réalisation de l'invention, la programmation comporte une rampe de freinage, le moteur étant toujours sous tension, cette rampe étant suivie de l'arrêt d'alimentation électrique du moteur.

Dans une forme particulière de réalisation de l'invention, la programmation permet d'imposer une valeur Za dite valeur d'alerte de la profondeur de perçage, cette valeur déterminant le début du ralentissement de la vitesse de rotation. L'expérience montre qu'il faut au minimum 200 millisecondes pour arrêter le moteur.

Dans une forme particulière de réalisation de l'invention, on évite que subsiste un copeau non détaché au fond du trou, au moyen d'une temporisation précédant la remise en marche du moteur. Dans cette forme, la vitesse de rotation reprend la valeur dite de remontée non pas lorsque l'appareil détecte un incrément en z, mais lorsqu'un temps prédéfini, dit temporisation, est écoulé. Il suffit alors à l'opérateur de ne plus faire varier la pénétration lorsque la perceuse s'arrête; après la temporisation, le dernier copeau est détaché ce qui laisse un fond de trou net lors de la remontée de la perceuse.

Pour améliorer le confort d'utilisation, divers dispositifs peuvent être prévus, tels que:
- des moyens indépendants pour entraîner l'avance de l'outil. Ces moyens peuvent consister en un moteur séparé, et être également commandés par la programmation;
- un étau maintenant la pièce à percer, le serrage de cet étau étant dépendant de la programmation. En particulier, le serrage de l'étau peut être commandé à une valeur prédéterminée de l'avance de l'outil;
- le moteur électrique peut être commandé par l'entremise d'un convertisseur de fréquence.

La suite de la présente description générale traitera d'un second mode de réalisation de l'invention, dans lequel la machine est une taraudeuse, ou encore une perceuse équipée d'un taraud pénétrant dans un avant-trou.

Il est connu, par exemple du catalogue d'outillage Brütsch/Rüegger SA, 8010 Zürich, Edition 1994/1999, pages 869 à 874, des appareils de taraudage avec inversion et limitateur de couple. Ces appareils s'interposent entre le mandrin de la perceuse et le taraud; ils comprennent une tige venant dans le mandrin de la perceuse, et des mors destinés à serrer le taraud.

Pour empêcher la casse du taraud, il est nécessaire de régler ces appareils au moyen de bagues. Lorsque le taraud arrive au fond d'un trou borgne, il se bloque, l'embrayage patine et l'opérateur inverse alors le sens de l'avance.

Ces appareils présentent l'inconvénient d'être encombrants; ils fonctionnent à l'aide de trains d'engrenage qui font offices de réducteurs. Ces engrenages présentent des jeux qui obligent à recourir à un amortisseur d'entrée. De plus, ils exigent de l'entretien, et une barre transversale servant à empêcher leur rotation avec le mandrin.

Par ailleurs, de tels appareils de taraudage n'autorisent l'usage que d'une gamme limitée de tarauds, (par exemple M4-M12), chaque appareil étant spécifique pour un taraudage à droite ou à gauche.

Dans ce mode de réalisation, le déplacement linéaire, ou avance, du taraud est lié à l'angle de rotation du moteur.

L'invention, plus particulièrement décrite par les sous-revendications 4 à 7, permet à l'opérateur d'interrompre le taraudage et même d'inverser le sens de la rotation du moteur, par action sur des moyens très simples à manipuler tels qu'une pédale. L'inversion du sens de rotation permet de ressortir le taraud pour débourrer les copeaux.

L'invention présente des avantages particuliers quand la pédale est un coupe-circuit qui prend le pas sur la programmation. Ce retour instantané au mode "Manuel" par simple action de l'opérateur permet d'éviter des casses d'outils, par exemple, quand le bruit émis par machine indique à l'oreille exercée de l'opérateur que la programmation sollicite trop le matériel.

Dans une forme particulière de réalisation du mode "taraudeuse", la programmation est réalisée par saisie sur un tableau de commande comprenant un écran de contrôle, des boutons de fonction, et des potentiomètres. L'un des potentiomètres pourra déterminer la vitesse de rotation de la machine, un autre le couple du moteur.

Dans une forme particulière de réalisation de l'invention en mode "taraudeuse", dans laquelle l'avance de l'outil est déterminée par un volant garni de boules, encore appelé cabestan, il est avantageux de prévoir un interrupteur sur chacune des boules de ce volant. Ainsi, l'opérateur qui commande l'avance a toujours la main sur une des boules et peur arrêter la machine en actionnant l'interrupteur de cette boule.

L'invention sera mieux comprise à la lecture de la description détaillée qui va suivre, en référence au dessin annexé dans lequel :
- la figure 1 représente une perceuse à colonne, ou perceuse d'établi;
- la figure 2 montre une perceuse portative venant dans un socle magnétique pour certaines applications connues en soi;
- la figure 3 montre un exemple de schéma de branchement du variateur;
- la figure 4 représente une portion agrandie de la figure 1, à savoir l'appareil de programmation 2.

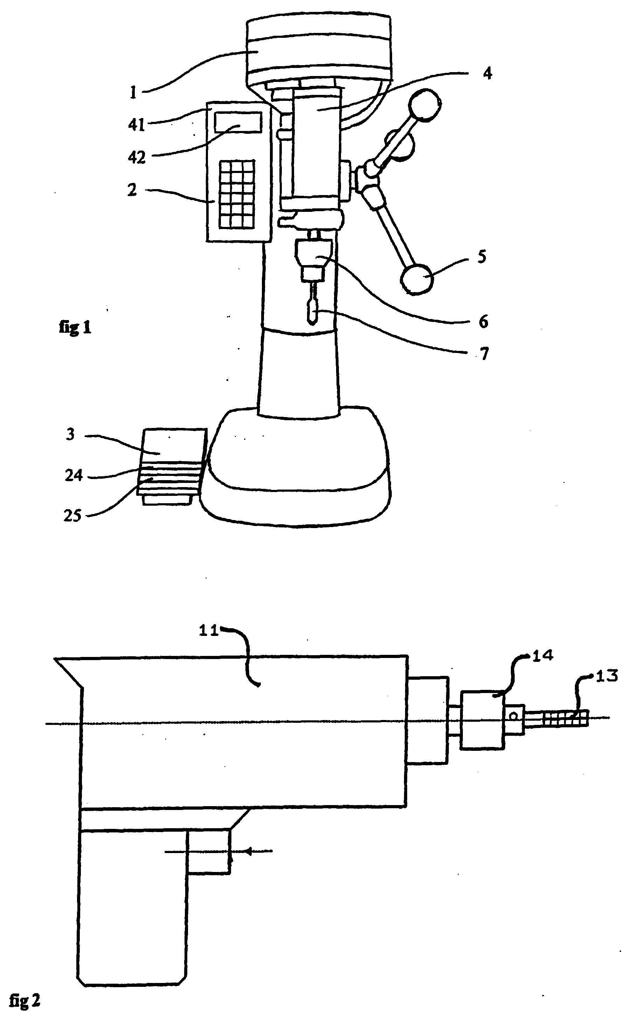

La figure 1 représente une vue en perspective d'une perceuse ou taraudeuse 1 selon l'invention. Il s'agit d'une perceuse d'établi ou à colonne, munie d'un appareil de programmation 2, d'une pédale 3. Un volant muni de boules 5 permet à l'opérateur de faire descendre l'enveloppe 4 du moteur 28, le mandrin 6 et l'outil 7 sur la pièce à travailler (non représentée).

L'appareil de programmation 2 comprend une commande 41, un écran de contrôle 42, des touches S1 à S15 et des potentiomètres P1 à P3.

La pédale 3 peut être, selon la forme de réalisation retenue, une pédale à contact 24 ou une pédale analogique 25.

La figure 2 montre une perceuse portative 11 munie d'un mandrin 14 portant un outil 13.

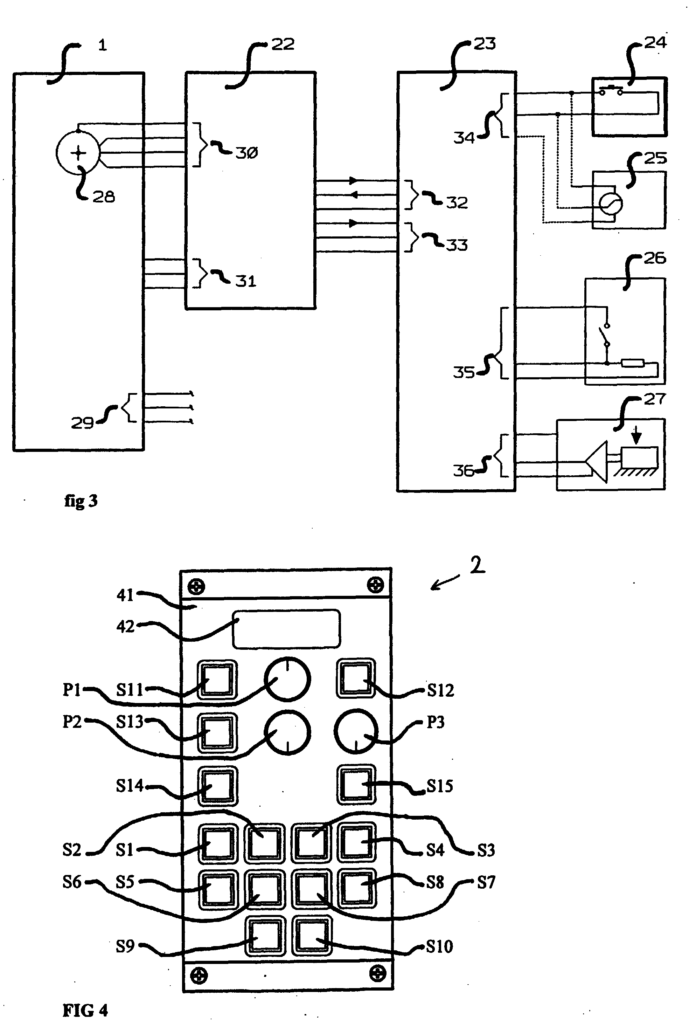

La figure 3 montre un exemple de schéma de branchement du variateur 22, qui peut être intégré avec la commande 41.

Une alimentation 29, triphasée, relie la perceuse 1 au réseau. Le variateur 22 est connecté au réseau par l'alimentation 31, et délivre en 30 un courant fort alimentant le moteur 28.

Un bloc 23 représente un sous-ensemble de l'appareil 2 qui comprend aussi le variateur 22.

Les connections 32 et 33 représentent respectivement une interface de type RS232 et l'alimentation en basse tension (24V) du bloc 23.

Dans le cas d'une pédale à contact 24, le dispositif de lecteur 34 détecte un signal tout-ou-rien. Dans le cas d'une pédale analogique 25, il détecte (en pointillé sur la figure 3) un signal qui est fonction de la course de pédale analogique 25.

Un sous-ensemble 26 détecte une cote d'alerte Za, lue par un lecteur 35.

Un sous-ensemble 27 de mesure de couple moteur est connecté à une unité 36 de lecture du couple.

La figure 4 représente le panneau de commande 2, avec la commande 41, un écran de contrôle 42, trois potentiomètres P1, P2 et P3, et des touches de fonction S1 à S15.

On va d'abord, comme dans la description générale, décrire le fonctionnement de la machine dans le mode "perceuse", en commençant par décrire un cycle de perçage, l'appareil 2 étant déjà programmé.

En début de cycle, le moteur est mis en route par l'appareil 2 lors de la descente du support 4 par action de l'opérateur sur les boules 5. Au moment où le foret 7 est engagé dans la matière à percer, un étau dans lequel est serrée la pièce à usiner est bloqué sur le socle de la perceuse afin d'immobiliser cette pièce par rapport au socle. C'est une sortie particulière de l'appareil 2 qui contrôle ce serrage, par exemple par commande d'une électrovanne pour serrage pneumatique (non représentée).

L'opérateur se contente d'enfoncer le foret 7 dans la pièce, sans avoir à se préoccuper de la profondeur.

Lorsque celle-ci s'approche de la valeur de consigne de profondeur de perçage Zc, l'appareil 2 contrôle la descente de l'outil, et freine puis arrête la rotation du moteur une fois la valeur Zc atteinte. La position en z de l'outil étant constamment connue, l'appareil 2 détecte l'approche de la valeur Zc et peut à ce moment commencer le processus de ralentissement de la rotation. Ceci permet de ne pas dépasser physiquement la valeur Zc.

L'opérateur peut alors inverser le sens de rotation du volant. La programmation commande le redémarrage du moteur, à une vitesse de remontée prédéterminée, dès qu'un incrément en z est détecté par l'appareil 2. Ceci assure l'évacuation des copeaux par le foret, lors de la remontée du foret.

Une fois le foret sorti de la pièce, celle-ci est évacuée, une nouvelle pièce est mise en place. La remontée complète du foret permet d'amorcer un nouveau cycle.

On va maintenant donner un exemple de programmation pour le mode "perçage".

Le régleur saisit au clavier de l'appareil 2, avec contrôle au moyen de l'écran 42 :
- la vitesse de rotation nominale du foret
- le couple maximum autorisé en Nm ou en % de la valeur maximale
- activation ou non d'accessoires périphériques (pompe de graissage, serrage d'étau).

Il saisit également la cote z = 0 sur l'axe z'z, éventuellement alors que le foret 7 ne tourne pas. Cette valeur z= 0 est reprise à chaque changement d'outil ou de pièce.

Le régleur peut être utilement guidé par l'affichage 42, afin de déterminer les valeurs de réglage ci-dessus dans l'ordre adéquat.

Cette programmation en mode "perceuse" permet à l'opérateur de percer sans lassitude, due à la concentration, et sans risque d'erreur de cote, un grand nombre de trous identiques.

On va maintenant, en passant à la description détaillée d'un mode "taraudeuse", donner un exemple des fonctions attribuées aux touches de l'appareil de programmation 2.

Les touches S1 à S8 correspondent à des touches de mémorisation. En principe, chaque touche est attribuée à un type de taraud avec la vitesse et le couple correspondant.

Les touches S9 et S10 sont utilisées pour la programmation.

La touche S11 correspond au mode de perçage.

La touche S12 correspond à la gestion de la pédale uniquement en mode perçage.

La touche S13 correspond au mode taraudage.

La touche S14 correspond au retour du taraud en vitesse rapide.

La touche S15 permet de diminuer le couple pendant l'utilisation des touches de programmation S1 à S8.

Les touches S11 et S13 utilisées ensemble correspondent au mode de vissage et dévissage.

Le potentiomètre P1 permet de choisir une vitesse de rotation si la touche S11 est active.

Le potentiomètre P2 permet de choisir une vitesse de rotation si la touche S13 est active.

Le potentiomètre P3 permet de choisir un couple de rotation si la touche S13 est active.

L'écran est de type LED (diodes électro-luminescentes) afin d'avoir une bonne lecture lumineuse avec de grands caractères. D'autres types d'écran peuvent être montés.

A l'intérieur de chaque bouton une lampe LED (diodes électro-luminescentes) est incorporée.

Le boîtier est en aluminium; on peut choisir un modèle standard du marché.

La protection contre les poussières et les liquides est de préférence selon la norme dite IP40 et en option IP65.

Le variateur de fréquence 22 fourni des signaux triphasés PWM (pulse width modulation) au moteur 28. Ces signaux permettent de faire tourner le moteur 28 dans le sens et à une vitesse désirés. Ces signaux permettent également de régler le couple du moteur 28.

La commande donne toutes les informations nécessaires au variateur 22 afin d'obtenir une rotation du moteur 28 selon le désir de l'opérateur.

Si le moteur n'est pas triphasé, la partie variateur 22 peut être remplacé par tout autre système similaire. Par exemple, si le moteur est à courant continu le variateur sera remplacé par une amplificateur à courant continu.

Selon la figure 3, nous avons un exemple de câblage d'une perceuse à colonne 1. Le câble reliant la perceuse au moteur est modifié pour être relié au variateur 22. Le choix d'insérer le variateur 22 entre la perceuse 1 et le moteur 28 permet de préserver les fonctions usuelles de la perceuse 1. Ainsi les fonctions d'éclairage de la place d'usinage, les lampes témoins, l'arrêt d'urgence et la pompe d'arrosage fonctionnent comme prévu par le constructeur de la perceuse.

Une liaison série 32 du type RS232 permet d'avoir un dialogue entre le bloc 23 et le variateur 22.

Une alimentation 33 de 24 Volts depuis le variateur 22 permet d'alimenter le bloc 23.

Un capteur de vitesse sera monté sur la perceuse 1 en option selon le désir du client, et il sera raccordé à la commande.

Avec cet exemple de mode de fonctionnement "taraudeuse", la machine 1 fonctionne soit en taraudeuse, soit en visseuse/dévisseuse.

### Le mode taraudage fonctionne de la façon suivante :

Le taraudage fonctionne avec deux paramètres, la vitesse de rotation de l'outil 7 et une valeur de couple. Ces valeurs sont réglables par les potentiomètres P2 et P3.

En pressant la touche S13, la LED (diodes électro-luminescentes) s'allume, le mode taraudage est actif. Le potentiomètre P2 permet de calibrer la vitesse de rotation, l'écran indique la vitesse en tours par minute; le potentiomètre P3 permet de calibrer le couple de rotation, l'écran indique Nm00. Les chiffres indiquent une grandeur comprise entre 00 à 99%.

Chaque fois que l'on presse sur la touche S13, l'écran indique soit la vitesse soit le couple.

La vitesse d'usinage des tarauds est donnée par des tabelles disponibles chez les vendeurs de tarauds. Le couple maximum n'est habituellement pas donné par le fabricant de tarauds. Pour notre application, un fabricant de tarauds (la maison Daniel Charpilloz SA, CH-2735 Malleray) nous a fourni des formules correspondantes à leur type de tarauds. Nous avons donc pu calculer les couples pour chaque type de taraud.

Pour tarauder, l'opérateur mécanicien connaît assez bien les vitesses de taraudage, mais le couple n'est pas une grandeur très utilisée. C'est la raison pour laquelle le fabricant de tarauds n'a pas de table indiquant le couple.

### Méthodes de réglage du couple.

Imaginons que l'opérateur doit tarauder un trou borgne à M5, la question est de savoir comment régler le potentiomètre P3. (Le problème est le même avec un système mécanique à friction : comment régler les bagues pour que l'embrayage patine).

### Méthode a)

L'opérateur n'a pas de clé dynamométrique. Nous lui proposons de prendre un taraud neuf et en acier dur. Le potentiomètre P2 doit être calibré sur la vitesse idéale d'usinage. Le potentiomètre P3 doit être à environ 0%. A 0%, le moteur tourne avec un couple très faible. Nous conseillons de commencer par un trou traversant. Un trou borgne n'apporte rien au réglage.

Maintenant, en pressant sur la pédale, la perceuse tourne à la vitesse du potentiomètre P2. L'opérateur approche le taraud et, lorsqu'il s'arrête de tourner, il faut augmenter le potentiomètre P3, l'opérateur doit trouver le point entre la rotation et le blocage du taraud. Le point maximum est trouvé, nous conseillons d'augmenter la valeur de P3 de 50% afin de garantir un fonctionnement en cas d'usure du taraud. Un taraud usé peut demander jusqu'à 3 fois son couple nominal. L'opérateur a ainsi pu trouver très facilement le réglage du couple avec le potentiomètre P3, parce que le système permet de régler le couple pendant le taraudage. Cette valeur reste toujours valable. Le système est numérique sans usure. Le même essai peut être fait quelques années plus tard, le résultat sera le même.

Cette valeur de couple est à mettre en relation d'après les types d'aciers voire les plastiques. D'après notre expérience, le réglage n'est pas du tout critique. Avec un peu d'expérience, le réglage du couple sera assimilé aussi bien que les vitesses de rotation. De plus, avec la mémorisation des tarauds, le réglage optimal peut être mémorisé dans la commande.

Pour certains taraudages, il est impératif de ne pas casser le taraud. Alors, il suffit de baisser le couple déterminé d'environ 30% et si le taraud se bloque, d'augmenter progressivement la valeur sans dépasser le maximum. L'avantage du système est de pouvoir agir sur le couple pendant le taraudage.

### Méthode b)

L'opérateur à une clef dynamométrique à aiguille. Si l'opérateur veut travailler avec précision, cette méthode est très efficace. Il faut adapter la clef sur le mandrin 6 et l'empêcher de tourner avec le mandrin 6. Le fonctionnement est identique à la description de la méthode a) ci-dessus. Le calibrage se fait sans rotation, mais en mesurant la force appliquée sur la clef dynamométrique. On obtient sur l'écran les valeurs du couple. Pour chaque taraud et pour un acier défini, nous connaissons la valeur de réglage du potentiomètre P3.

Dans le cas d'une nouvelle perceuse, le fabricant peut mettre en mémoire ou établir une tabelle avec les couples correspondants aux tarauds.

La touche S14 force un retour rapide du taraud. En activant cette touche, on obtient une vitesse de retour rapide du taraud. La vitesse de retour est mémorisée et indiquée sur l'écran durant 1 seconde, pour modifier cette valeur, il faut maintenir la touche S14 enfoncée et avec la touche S9, on diminue la vitesse. Avec la touche S10, on l'augmente.

### Calibration des touches S1 à S8

Ces touches servent à mémoriser les paramètres correspondants à un type de taraud : d'une part, le type de taraud, par exemple M3 ou M4, etc., ensuite la vitesse et le couple de taraudage. A chaque fois que l'on presse sur une des touches S1 à S8, l'écran passe à un autre paramètre. Lorsqu'une des ces touches est active, la touche S13 s'éteint. Pour modifier le texte (M3 ou M4, etc.), il suffit de presser les touches de programmation S9 pour diminuer (-1) ou S10 pour augmenter de +1.

Les deux autres paramètres se changent différemment, il faut mettre les potentiomètres P2 et P3 à la valeur désirée. Pour l'enregistrement, afin d'éviter de fausses manipulations, nous avons décidé de pratiquer de la manière suivante :

A) Il faut presser sur la pédale et la maintenir pressée. Le moteur se mettra en rotation. Ensuite, il faut choisir la touche où on désire enregistrer les paramètres et laisser la touche pressée. Chaque 2 secondes, la lettre "S" s'inscrit sur l'écran, ensuite les lettres "SA", ensuite celles "SAV", et finalement le mot anglais "SAVE". En laissant revenir la touche, le mot anglais "NO" s'inscrit sur l'écran, ce qui veut dire "n'est pas sauvé en mémoire". Si, au contraire, on continue à presser alors le mot anglais "YES" s'inscrit à l'écran, ce qui veut dire que les nouvelles données sont mémorisées et que les paramètres des potentiomètres P2 et P3 sont enregistrés dans la mémoire de la commande.

Dans le cas d'une nouvelle perceuse, ces touches peuvent être déjà mémorisées directement dans la commande.

### Utilisation du taraudage après que la commande soit calibrée

Pour l'utilisation du taraudage, il y deux modes. Un mode manuel (touche S13) et une mode automatique (touches S1 à S8).

Avec la touche S13, la commande tient compte de la position des potentiomètres P2 et P3. C'est à l'utilisateur de savoir quel taraud il utilise et quel paramètre il désire ajuster pour ce taraud.

Avec les touches S1 à S8, il n'y a pas lieu de s'occuper des paramètres. L'écran affiche la valeur du taraud mémorisé, par exemple (M3 ou M4) etc., la vitesse et le couple de rotation, à chaque pression sur la touche, un de ces paramètres est affiché. Les potentiomètres P2 et P3 sont inactifs. Le système est prêt à être utilisé.

La touche S15 s'utilise spécialement pour les trous borgnes. Elle agit en complément des touches S1 à S8. Lorsqu'une des ces touches est pressée, la vitesse et le couple du taraudage mémorisé sont actifs. Il est utile, si la matière à tarauder change, de modifier le couple avec la touche S15. On rend alors le potentiomètre P3 actif et on peut régler le couple du taraud de zéro à la valeur correspondante de la touche S1 à S8 active. Ce réglage a pour avantage de ne pas dépasser, avec le potentiomètre P3, la limite maximum déjà calibrée sur la touche choisie.

### Quelques explications sur l'utilisation de la pédale en mode taraudage

Nous allons décrire l'utilisation dans le cas de trous à tarauder traversants.

Il y a trois fonctions dans le taraudage. D'une part, il faut faire tourner le taraud afin qu'il pénètre dans la matière. D'autre part, il faut ressortir le taraud. Reste un dernier pas : arrêter la rotation du taraud.

Pour commencer, il faut sélectionner une touche concernant le taraudage (S13 ou S1 à S8). En pressant la pédale, la rotation est enclenchée et l'opérateur peut descendre le taraud dans le trou à tarauder. Lorsque le taraud est dans la matière, l'opérateur suit le taraud. Pour inverser le sens, il suffit de relever la pédale. En faisant ce va-et-vient avec la pédale, on peut faire du débourrage très facilement. Pour dégager le taraud, il faut laisser la pédale revenir. Maintenant, le taraud est sorti du trou taraudé.

Il faut encore arrêter la rotation du taraud. Il suffit de presser brièvement sur la pédale et le taraud s'arrête. Le temps doit être inférieur à 0.5 secondes. Si on quitte la machine sans arrêter le taraudage, de toute manière, la commande arrêtera le taraudage 30 secondes après qu'on ait relâché la pédale.

Si, pendant le taraudage, l'opérateur interrompt le cycle, il suffit de donner un coup de pédale rapide et la rotation s'arrête immédiatement. En pressant sur la pédale, le taraud continue. Même si le taraud est déjà engagé, un arrêt ne met pas en péril la finition du taraudage.

### Taraudage à droite ou à gauche

Il est parfois demandé un taraudage à gauche. Il suffit de presser en même temps les touches S13 et S14 pendant 5 secondes. Une flèche "direction gauche" s'affichera sur l'écran. Pour revenir au taraudage à droite, il suffit de presser à nouveau sur les touches S13 et S14 pendant 5 secondes. Une flèche "direction droite" s'affichera sur l'écran.

### Mode visseuse et dévisseuse

La perceuse peut aussi être transformée en visseuse et dévisseuse. En pressant les touches S11 et S13 ensemble pendant 2 secondes, la perceuse se met en mode "visseuse", en pressant à nouveau sur ces deux touches, la perceuse se met en mode "dévisseuse". La vitesse de rotation est calibrée par le potentiomètre P2 et le couple par le potentiomètre P3. En pressant sur la pédale, on enclenche la vitesse, en laissant revenir la pédale, la visseuse s'arrête.

La commande concernant l'opérateur a été précédemment décrite. Restent les paramètres pour l'installateur du système; une grande perceuse ou une petite perceuse ne peuvent pas avoir les mêmes paramètres. De plus, les tours par minute doivent être définis dans le cas où il n'y a pas de capteur sur l'axe du mandrin. Ces paramètres ne doivent pas être changés souvent. Pour éviter une erreur de manipulation, nous avons fait une procédure afin d'avoir accès à ces paramètres.

### Procédure pour changer les paramètres du variateur

Pendant la mise en marche, il faut presser ensemble les touches de programmation S9 et S10. Les lettres "STOR" vont s'inscrire sur l'écran, en glissant lettre par lettre de droite à gauche à une cadence de 2 secondes et ensuite le mot anglais "YES" va s'inscrire. A ce moment, on peut relâcher les touches S9 et S10. De plus, un point rouge sera allumé au fond de l'écran pour bien indiquer le mode d'utilisation.

Les touches S11 à S13 fonctionneront normalement afin de permettre de faire des tests de fonctionnement.

Les touches S1 à S8 correspondront maintenant à des paramètres du variateur.

Liste des paramètres du variateur :
- la touche S1 correspond à la vitesse maximum du moteur en Hz;
- la touche S2 correspond à l'écran, si pas de capteur sur l'axe du mandrin;
- la touche S3 correspond à la rampe d'accélération;
- la touche S4 correspond à la rampe de décélération;
- la touche S8 correspond à la recharge des paramètres d'usine au niveau variateur;
- la touche S5 à S7 restent disponibles.

### Définitions des paramètres de valeur

La programmation est identique pour chaque touche S1 à S8. Pour corriger sur l'écran, il faut se servir des touches de programmation S9 (-1 incrément) et S10 (+1 incrément). La touche S1 permet d'afficher la valeur maximum de la rotation du moteur en Hertz. Par exemple, pour moteur 4 pôles la valeur 1 Hertz correspond à 30 tours/minute. Le variateur a la capacité de faire tourner le moteur à des vitesses très rapides (un facteur 10 de la valeur nominale). Les limites se situent au niveau mécanique (vibration et durée des paliers d'entraînement). En pratique, nous conseillons de travailler au maximum avec 4800 tours/minute au moteur. Un moteur 4 pôles pour 50 Hertz, tourner à 1500 tours/minute. 4800 tours/minute correspond à 160 Hertz. On doit afficher 0160 sur l'écran.

La touche S2 affiche le temps d'accélération du moteur de 0 à 50 Hertz. Ce temps est déterminé en fonction des masses mécaniques à entraîner. En pratique, nous comptons environ 1.5 secondes. On doit afficher 1500 sur l'écran.

La touche S3 permet d'afficher le temps de freinage du moteur depuis la vitesse de 50 à 0 Herz. Comme ci-dessus, il faut tenir compte des masses mécaniques. En pratique, nous comptons environ 0.2 secondes. On doit donc afficher 200 sur l'écran.

La touche S4 est active pour le cas où la perceuse n'a pas de détecteur sur l'axe du mandrin. Dans la cas particulier d'un détecteur, S4 est égale à 0. Si S4 est égal à 100, l'écran indique une vitesse identique à la fréquence en Hertz du moteur. Par exemple, si S4 est égale à 1000 et la fréquence de rotation est de 50 Herz dans le moteur, l'écran affiche 500. En résumé, la commande divise la fréquence par 100, ceci pour garder la précision.

Pour enregistrer dans la mémoire, il faut presser ensemble les touches S9 et S10 chaque 2 secondes, la lettre "S", ensuite les lettres "SA", ensuite celles "SAV" et enfin le mot anglais "SAVE" vont s'inscrire à l'écran. Jusque-là, l'enregistrement n'est pas encore fait et en laissant revenir la touche, le mot anglais "NO" s'affiche à l'écran, ce qui veut dire "n'est pas sauvé en mémoire". Si on continue à presser, alors le mot anglais "YES" s'affiche à l'écran, ce qui signifie que les nouvelles données sont mémorisées. La commande quitte le mode "paramètre".

Il est bien entendu que l'invention n'est pas limitée aux exemples décrits.

## Revendications

1. Machine tournante (1, 11) équipée d'un moteur électrique (28) susceptible de faire tourner un outil (7, 13) serré dans un mandrin (6, 14), l'avance de l'outil (7, 13) étant déterminée manuellement par un opérateur,
caractérisée en ce que
l'électronique de commande d'un variateur (22) du moteur électrique (28) comprend des moyens d'assistance (3, 24, 25, 41) à l'opérateur pour optimiser le déplacement linéaire et hélicoïdal de l'outil (7, 13).

2. Méthode d'amélioration des fonctionnalités d'une machine tournante électrique (1, 11), caractérisée par une programmation électronique prévue entre une source de courant fort (30) et le moteur (28) de la machine tournante électrique (1, 11).

3. Méthode selon la revendication 2, caractérisée en ce que la machine tournante électrique est une perceuse (1, 11) équipée d'un outil d'excavation tel qu'un foret (7, 13), ce foret (7, 13) devant pénétrer dans un objet à une profondeur (Zc) définie, et en ce que la programmation électronique provoque l'arrêt de l'excavation lorsque la profondeur (Zc) définie est atteinte par le foret (7, 13).

4. Méthode selon la revendication 2, caractérisée en ce que
- la machine tournante électrique (1, 11) est une taraudeuse ou une perceuse portant un taraud (7, 13) serré dans un mandrin (6, 14), ce taraud (7, 13) pénétrant dans un avant-trou déjà percé dans un objet à une profondeur définie,
- la programmation électronique permet à l'opérateur d'inverser à volonté le sens de la rotation du moteur (28) et du taraud (7, 13) par des moyens (3, 24, 25) simples à manipuler,
et en ce que
- la programmation électronique limite le couple appliqué au taraud (7, 13), en particulier lorsque le taraud (7, 13) arrive à la profondeur définie dans l'avant-trou.

5. Méthode selon revendication 4, caractérisée en ce que les moyens comprennent une pédale (3, 24, 25), cette pédale étant un coupe-circuit (24), prioritaire sur la programmation, ou une pédale analogique (25) dont le signal est interprété par l'électronique de commande d'un variateur (22) du moteur électrique (28).

6. Méthode selon revendications 2 à 5, caractérisée en ce que la programmation électronique est réalisée par saisie sur un tableau de commande (41) comprenant un écran de contrôle (42), des boutons de fonction (S1 - S15), des potentiomètres (P1, P2), un des potentiomètres (P1) déterminant la vitesse de rotation de la machine tournante électrique (1, 11) et un autre potentiomètre (P2) déterminant le couple de cette rotation.

7. Machine tournante (1) selon revendication 1, caractérisée en ce que l'avance de l'outil (7) est déterminée par un volant garni de boules (5), chacune des boules (5) étant munie d'un interrupteur.

8. Méthode selon la revendication 3, caractérisée en ce que la programmation entraîne la mise en fonction d'un frein agissant sur l'avance de l'outil (7, 13), en ce que la programmation comprend la possibilité de saisir la cote de début de perçage puis de saisir et de mémoriser une valeur (Zc) de consigne de profondeur de perçage,
et en ce que la programmation permet de plus de saisir une valeur d'alerte (Za) à partir de laquelle la rotation est ralentie.

9. Méthode selon la revendication 8, caractérisée en ce que la programmation prévoit que la vitesse de rotation s'annule lorsque la valeur (Zc) de consigne de profondeur est atteinte, puis reprend une valeur prédéterminée dès que l'outil (7, 13) remonte.

10. Méthode selon la revendication 8 ou 9, caractérisée en ce que la programmation comprend une temporisation au bout de laquelle la rotation de l'outil (7, 13) reprend même en l'absence de remontée de l'outil.
